# EUROPÄISCHE PATENTSCHRIFT

(11) **EP 3 078 088 B1**
(45) Veröffentlichungstag und Bekanntmachung des Hinweises auf die Patenterteilung: **03.02.2021**
(21) Anmeldenummer: 13805818.5
(22) Anmeldetag: 05.12.2013
(51) Int. Cl.: H01S 3/00, H01S 3/23, H01S 3/223, H05G 2/00

(54) **VERSTÄRKERANORDNUNG UND TREIBERLASERANORDNUNG FÜR EINE EUV-LICHTQUELLE DAMIT**
AMPLIFIER ARRANGEMENT AND DRIVER LASER ARRANGEMENT FOR AN EUV LIGHT SOURCE COMPRISING SAME
SYSTÈME D'AMPLIFICATEUR ET SYSTÈME DE LASER EXCITATEUR POUR SOURCE DE LUMIÈRE UVE ÉQUIPÉ DE CE SYSTÈME

(43) Veröffentlichungstag der Anmeldung: 12.10.2016
(73) Patentinhaber: TRUMPF Lasersystems for Semiconductor Manufacturing GmbH, 71254 Ditzingen (DE)
(72) Erfinder: SCHULZ, Joachim, 70839 Gerlingen (DE)
(74) Vertreter: Kohler Schmid Möbus Patentanwälte
(86) Internationale Anmeldenummer: PCT/EP2013/075635
(87) Internationale Veröffentlichungsnummer: WO 2015/082004

(56) Entgegenhaltungen:
- US-A- 3 781 714
- US-A1- 2008 087 847
- US-A1- 2010 117 009
- US-A1- 2010 182 579
- US-A1- 2012 092 746

## Beschreibung

Die vorliegende Erfindung betrifft eine Verstärkeranordnung zur Verstärkung von Laserstrahlung, insbesondere für eine Treiberlaseranordnung einer EUV-Lichtquelle. Die Verstärkeranordnung weist mindestens einen optischen Verstärker zur Verstärkung von gepulster Laserstrahlung auf. Die Erfindung betrifft auch eine Treiberlaseranordnung für eine EUV-Lichtquelle mit einer solchen Verstärkeranordnung.

Eine Treiberlaseranordnung für eine EUV-Lichtquelle ist beispielsweise aus der US 2009/0095925 A1 bekannt geworden. Die dort beschriebene Treiberlaseranordnung weist eine Strahlquelle zur Erzeugung von gepulster Laserstrahlung und einen oder mehrere optische Verstärker zur Verstärkung der gepulsten Laserstrahlung auf. Die Strahlquelle der Treiberlaseranordnung dient zur Erzeugung von so genannten Seed-Pulsen, die in dem bzw. in den optischen Verstärkern auf hohe Laserleistungen von mehreren kW, ggf. von 10 kW oder darüber verstärkt werden. Die von der Treiberlaseranordnung verstärkte Laserstrahlung wird über eine Strahlführungseinrichtung einer Fokussiereinrichtung zugeführt, welche die Laserstrahlung bzw. den Laserstrahl in einem Zielbereich fokussiert. In dem Zielbereich wird ein Target-Material bereitgestellt, welches bei der Bestrahlung mit dem Laserstrahl in einen Plasma-Zustand übergeht und hierbei EUV-Strahlung emittiert.

Bei der Verwendung von optischen Verstärkern zum Verstärken von Laserpulsen besteht grundsätzlich das Problem, dass ein parasitärer Laserbetrieb (engl. "selflasing") stattfinden kann, der zeitlich vor dem zu verstärkenden Laserpuls auftritt und ungewollt Laserstrahlung erzeugt, so dass das in dem optischen Verstärker vorgesehene Verstärkungsmedium weniger Leistung an den zu verstärkenden Laserpuls abgeben kann. Der parasitäre Laserbetrieb tritt auf, wenn zwei (oder mehr) Punkte oder Flächen im Strahlengang der Laserstrahlung einen Rückreflex erzeugen. Auch ein schwacher Rückreflex an den beiden Flächen bzw. Punkten ist ggf. ausreichend, um zusammen mit dem Verstärkungsmedium des optischen Verstärkers einen stark verlustbehafteten Resonator zu bilden, der die parasitäre Laserstrahlung erzeugt.

Zur Unterdrückung von parasitärer Laserstrahlung ist es bekannt, so genannte optische Isolatoren einzusetzen, die so ausgebildet sind, dass sie nur in einer Richtung Laserstrahlung durchlassen und die aufgrund dieser Eigenschaft auch als optische Dioden bezeichnet werden. Derartige optische Isolatoren können beispielsweise zwischen einer Strahlquelle und einem optischen Verstärker oder auch zwischen zwei optischen Verstärkern angeordnet werden. Beispielsweise ist es aus der DE 41 27 407 A1 bekannt, jeweils eine optische Diode zwischen einem Injection-Seeding-Laser und einem Resonator sowie zwischen einem Resonator und einem Verstärker anzubringen.

Insbesondere bei der oben beschriebenen Anwendung können bei der Verstärkung hohe Laserleistungen von 500 W und darüber, von 1 kW und darüber und sogar von 10 kW und mehr erzeugt werden. Bei derart hohen Laserleistungen besteht das Problem, dass die bei herkömmlichen optischen Isolatoren verwendeten optischen Bauteile ggf. starke thermisch bedingte Aberrationen, insbesondere Astigmatismus, hervorrufen und zudem ggf. durch die Laserstrahlung beschädigt werden können. Aus den genannten Gründen werden optische Isolatoren derzeit nur für Laserstrahlung mit einer Leistung bis 150 W, ggf. bis 500 W verwendet. Zudem besteht das Problem, dass optische Isolatoren in der Regel Laserstrahlung, die in die unerwünschte Richtung propagiert, nicht zu 100% unterdrücken können, so dass insbesondere bei hohen Laserleistungen trotz der Verwendung von optischen Isolatoren der nicht unterdrückte Leistungsanteil so groß ist, dass ggf. trotz der Verwendung eines optischen Isolators parasitäre Laserstrahlung erzeugt wird.

Die US 2010/117009 A1 offenbart eine Verstärkeranordnung gemäß dem Oberbegriff von Anspruch 1.

Die US 3 781 714 A beschreibt ein Hochleistungslasersystem, das eine Strahlungsquelle und einen Verstärker mit einem optischen Isolator aufweist. Um die Erwärmung eines jeweiligen Isolatorelements zu verringern, wird vorgeschlagen, die zu absorbierende Strahlungsleistung auf zwei oder mehr optische Isolatoren zu verteilen.

### Aufgabe der Erfindung

Der Erfindung liegt die Aufgabe zugrunde, eine Verstärkeranordnung zur Verstärkung von Laserstrahlung sowie eine Treiberlaseranordnung für eine EUV-Lichtquelle mit einer solchen Verstärkeranordnung bereitzustellen, bei denen das Auftreten von parasitärer Laserstrahlung auch bei hoher Laserleistung wirksam unterdrückt werden kann.

### Gegenstand der Erfindung

Diese Aufgabe wird gelöst durch eine Verstärkeranordnung, insbesondere für eine Treiberlaseranordnung einer EUV-Lichtquelle, umfassend: (mindestens) einen optischen Verstärker zur Verstärkung von gepulster Laserstrahlung, mindestens ein reflektierendes Element, insbesondere ein Target-Material der EUV-Lichtquelle oder ein optisches Element, beispielsweise eine Blende, an dem ein Teil der aus dem optischen Verstärker austretenden Laserstrahlung zum optischen Verstärker zurück reflektiert wird, sowie mindestens einen im Strahlweg der Laserstrahlung angeordneten optischen Isolator, der eine Polarisator-Einrichtung zur Unterdrückung einer Polarisationskomponente der Laserstrahlung und eine zwischen der Polarisator-Einrichtung und dem reflektierenden Element angeordnete Phasenschiebe-Einrichtung aufweist, wobei zumindest die Polarisator-Einrichtung des optischen Isolators an einem Ort positioniert ist, an dem die Laserstrahlung eine Laserleistung von mehr als 500 W, ggf. von mehr als 1 kW, insbesondere von mehr als 5 kW aufweist, wobei die Polarisator-Einrichtung zur Reflexion einer nicht unterdrückten Polarisationskomponente der Laserstrahlung ausgebildet ist, und wobei die Polarisator-Einrichtung mindestens einen die zu unterdrückende Polarisationskomponente absorbierenden Dünnschicht-Reflektor aufweist, der einen Umlenkspiegel des optischen Verstärkers bildet, der in einem Gehäuse des optischen Verstärkers angeordnet und von einem gasförmigen Verstärkermedium umgeben ist.

Um eine derart hohe Laserleistung zu erzeugen, wird die Laserstrahlung typischer Weise in einer Strahlquelle erzeugt und in mindestens einem optischen Verstärker verstärkt, d.h. der Ort, an dem die Laserstrahlung die oben angegebene Laserleistung aufweist, befindet sich typischer Weise im Strahlweg hinter mindestens einem optischen Verstärker der Verstärkeranordnung.

Zur Unterdrückung parasitärer Laserstrahlung wird ein optischer Isolator eingesetzt, bei dem eine Polarisator-Einrichtung zur Unterdrückung einer PolarisationsKomponente mit einer Phasenschiebe-Einrichtung mit fest vorgegebener Phasenverschiebung, typischer Weise einer Phasenverschiebung von 90°, kombiniert wird, der auch als λ/4-Isolator bezeichnet wird. Hierbei wird ausgenutzt, dass die von der Polarisator-Einrichtung erzeugte, linear polarisierte Laserstrahlung von der Phasenschiebe-Einrichtung zirkular polarisiert wird und an dem reflektierenden Element mit im Wesentlichen entgegengesetzter zirkularer Polarisation reflektiert wird. Dies führt beim Rückwärts-Durchlauf durch die Phasenschiebe-Einrichtung zu einer im Wesentlichen um 90° gedrehten Polarisationsrichtung der reflektierten Laserstrahlung, so dass die reflektierte Laserstrahlung von der Polarisator-Einrichtung unterdrückt wird.

Nachfolgend werden Möglichkeiten beschrieben, die Polarisator-Einrichtung so auszubilden, dass diese die unerwünschte Polarisationskomponente der Laserstrahlung möglichst vollständig unterdrücken kann bzw. wie diese so ausgebildet werden kann, dass thermisch bedingte Aberrationen unterdrückt werden können. Auch ist es erforderlich, die Polarisator-Einrichtung so auszubilden, dass diese von der intensiven Laserstrahlung an dem Ort im Strahlengang, an dem diese angeordnet ist, nicht zerstört wird.

Der Ort im Strahlengang, an dem die Laserleistung mehr als 500 W beträgt, kann sich insbesondere im Strahlweg der verstärkten Laserstrahlung nach dem optischen Verstärker befinden. Weist die Polarisator-Einrichtung mehrere optische Komponenten auf, ist zumindest eine dieser optischen Komponenten einer Laserleistung von mehr als 500 W ausgesetzt. Die Anordnung einer Phasenschiebe-Einrichtung, die typischer Weise als mit einer phasenschiebenden Beschichtung versehener Spiegel ausgebildet ist, im Strahlengang von Laserstrahlung mit einer Laserleistung von mehr als 500 W ist in der Regel unproblematisch.

Der optische Isolator dient der optischen Isolation des optischen Verstärkers vor Rückreflexen von Laserstrahlung, die an einem reflektierenden Element erzeugt und in den optischen Verstärker zurück reflektiert werden. Bei optischen Verstärkern sind typische Reflektoren, an denen ein Teil der Laserstrahlung in den optischen Verstärker zurück reflektiert wird, Blenden, insbesondere Raumfilter mit Blenden, da diese nahe an das optische Strahlungsfeld der Laserstrahlung heranreichen. Das optische Element kann zwischen einer Strahlquelle und dem optischen Verstärker, zwischen dem optischen Verstärker und einem weiteren optischen Verstärker oder zwischen dem optischen Verstärker und zwischen dem (letzten) optischen Verstärker und einer weiteren optischen Einrichtung, beispielsweise einer Strahlführungseinrichtung, angeordnet werden. Ist die Verstärkeranordnung Bestandteil einer Treiberlaseranordnung einer EUV-Lichtquelle, kann auch das Target-Material, auf welches die mittels der Verstärkeranordnung verstärke Laserstrahlung fokussiert wird, ein reflektierendes Element bilden, an dem ein typischerweise geringer Anteil der auftreffenden Laserstrahlung zur Verstärkeranordnung zurück reflektiert wird.

Häufig ist sowohl im Strahlweg vor dem optischen Verstärker als auch im Strahlweg der verstärkten Laserstrahlung nach dem optischen Verstärker ein reflektierendes Element angeordnet, welches einen Teil der auftreffenden Laserstrahlung zum optischen Verstärker zurück reflektiert. Es ist möglich, den optischen Isolator so auszubilden, dass zur Unterdrückung der unerwünschten Polarisationskomponente nur eine einzige Polarisator-Einrichtung benötigt wird, die beispielsweise in den optischen Verstärker integriert sein kann. In diesem Fall ist im Strahlweg zwischen der Polarisator-Einrichtung und einem ersten reflektierenden Element, welches z.B. im Strahlweg nach dem optischen Verstärker angeordnet ist, eine erste Phasenschiebe-Einrichtung angeordnet und im Strahlweg zwischen der Polarisator-Einrichtung und einem zweiten reflektierenden Element, welches z.B. im Strahlweg vor dem optischen Verstärker angeordnet ist, ist eine zweite Phasenschiebe-Einrichtung angebracht. Die beiden Phasenschiebe-Einrichtungen erzeugen typischer Weise jeweils eine feste Phasenverschiebung von 90°.

Die Polarisator-Einrichtung zur Reflexion einer nicht unterdrückten Polarisationskomponente der Laserstrahlung ausgebildet. In diesem Fall ist die Polarisator-Einrichtung als Reflektor ausgebildet, der nur die erwünschte Polarisationskomponente reflektiert, d.h. der linear polarisierte Laserstrahlung mit einer gewünschten, zur unterdrückten Polarisationskomponente senkrechten Polarisationsrichtung erzeugt. Die unerwünschte Polarisationskomponente kann z.B. dadurch unterdrückt werden, dass diese von der Polarisator-Einrichtung absorbiert wird.

Die Polarisator-Einrichtung weist mindestens einen, bevorzugt zwei oder mehr die zu unterdrückende Polarisationskomponente absorbierende(n) Dünnschicht-Reflektor(en) auf. Ein solcher absorbierender Dünnschicht-Reflektor (engl. "absorbing thin film reflector", ATFR) weist ein Substrat auf, auf dem eine die Laserstrahlung in Abhängigkeit von der Polarisationsrichtung reflektierende oder absorbierende Beschichtung aufgebracht ist. Derartige absorbierende Dünnschicht-Reflektoren werden beispielsweise in Schneidlasern eingesetzt, um Rückreflexe aus dem Laserprozess in den Laser hinein zu vermeiden, die zu Instabilitäten des Laserprozesses führen könnten. Als Substrat eines solchen Dünnschicht-Reflektors wird häufig Kupfer verwendet. Die polarisationsselektive Beschichtung ist für eine vorgegebene Wellenlänge, z.B. ca. 10,6 µm, ausgelegt und reflektiert bei dieser Wellenlänge einen hohen Anteil (z.B. >98 %) der Laserstrahlung mit einer ersten Polarisationsrichtung (in der Regel s-polarisierte Laserstrahlung) und absorbiert einen Großteil der Laserstrahlung mit einer zweiten, zur ersten senkrechten Polarisationsrichtung (in der Regel p-polarisierte Laserstrahlung), so dass nur weniger als z.B. ca. 2 % der Laserstrahlung mit der unerwünschten Polarisationskomponente reflektiert wird. Die optische Achse des Dünnschicht-Reflektors bzw. der polarisationsselektiven Beschichtung ist typischer Weise unter einem Winkel von ca. 45° zur Polarisationsebene der einfallenden Laserstrahlung angeordnet. Der unterdrückte Strahlungsanteil ist dabei typischerweise p-polarisiert, der genutzte Strahlungsanteil ist typischerweise s-polarisiert. Zwei oder mehr Dünnschicht-Reflektoren können verwendet werden, um die Absorption der zu unterdrückenden Polarisationskomponente weiter zu erhöhen.

Der absorbierende Dünnschicht-Reflektor bildet einen Umlenkspiegel des optischen Verstärkers. Der oder ggf. mehrere Dünnschicht-Reflektoren der Polarisator-Einrichtung werden in diesem Fall in den optischen Verstärker integriert, indem diese als Umlenkspiegel des optischen Verstärkers dienen. Die oder zumindest einer der Dünnschicht-Reflektoren können in diesem Fall in einem Bereich des Strahlwegs angeordnet sein, in den ein als Verstärkungsmedium dienendes Gas, beispielsweise CO₂, eingebracht ist.

Durch die Anordnung des oder der Dünnschicht-Reflektoren in dem optischen Verstärker verlässt die Laserstrahlung den optischen Verstärker zu beiden Seiten (im Wesentlichen) linear polarisiert und mit gleicher Polarisationsrichtung. Um Rückreflexe von im Strahlweg vor und im Strahlweg hinter dem optischen Verstärker angeordneten reflektierenden Elementen zu unterdrücken, ist es - wie weiter oben beschrieben - in diesem Fall ausreichend, jeweils eine Phasenschiebe-Einrichtung mit konstanter 90°-Phasenverschiebung im Strahlweg vor und hinter dem optischen Verstärker anzuordnen.

Bei einer Weiterbildung weist die Polarisator-Einrichtung mindestens zwei Dünnschicht-Reflektoren mit unterschiedlicher Absorption für die zu unterdrückende Polarisationskomponente der Laserstrahlung auf. Eine hohe zu unterdrückende Laserleistung, insbesondere von mehreren hundert Watt oder mehr kann ggf. nicht von einem einzelnen Dünnschicht-Reflektor absorbiert werden bzw. würde diesen zu stark erhitzen und damit deformieren. In diesem Fall sollte die Absorption der Laserstrahlung mit der unerwünschten Polarisationskomponente auf zwei oder mehr Dünnschicht-Reflektoren verteilt erfolgen, wobei derjenige Dünnschicht-Reflektor, welcher an dem Ort mit der größten zu unterdrückenden Laserleistung angeordnet ist, die niedrigste Absorption für die Laserstrahlung aufweisen sollte. Der nicht an diesem Dünnschicht-Reflektor absorbierte Anteil der Laserstrahlung mit der unerwünschten Polarisationskomponente wird in diesem Fall von dem mindestens einen weiteren Dünnschicht-Reflektor absorbiert, der eine höhere Absorption für die zu unterdrückende Polarisationskomponente aufweist. Die höhere Absorption kann ggf. der fertigungstechnisch maximal möglichen Absorption für die unerwünschte Polarisationskomponente entsprechen, die für CO₂-Laserstrahlung typischer Weise bei ca. 98% oder mehr liegt.

Eine solche Weiterbildung ist insbesondere in dem Fall von Vorteil, dass die Polarisator-Einrichtung in einer Treiberlaseranordnung einer EUV-Lichtquelle angeordnet ist. In diesem Fall wird Laserstrahlung eines Seed-Lasers, bspw. eines CO₂-Lasers, in der Verstärkeranordnung verstärkt, über die Phasenschieber-Einrichtung zirkular polarisiert und auf ein Target-Material (bspw. ein Zinntröpfchen) gerichtet. Am Target-Material wird ein typischerweise geringer Anteil der Laserstrahlung zurück in die Verstärkeranordnung reflektiert, der ohne die Verwendung von optischen Isolatoren auf seinem Weg durch die Verstärkeranordnung verstärkt wird und den eigentlich gewünschten Prozess, d.h. die Verstärkung des Seed-Laserstrahls, schwächt. Die an dem Target-Material zurück reflektierte Laserstrahlung hat gegenüber der einfallenden Laserstrahlung eine im Wesentlichen entgegengesetzte zirkulare Polarisation, die beim Rückwärts-Durchlauf durch die Phasenschiebe-Einrichtung zu einer im Wesentlichen um 90° gedrehten Polarisationsrichtung gegenüber der vorwärts laufenden, zu verstärkenden Laserstrahlung führt.

In einer Weiterbildung weist die Polarisator-Einrichtung mindestens drei im Strahlweg der Laserstrahlung aufeinander folgende Dünnschicht-Reflektoren mit abnehmender Absorption für die zu unterdrückende Polarisationskomponente auf. Wie weiter oben beschrieben wurde, weist derjenige der Dünnschicht-Reflektoren, auf den die Laserstrahlung mit der größten Laserleistung auftrifft, die geringste Absorption für die unerwünschte Polarisationskomponente auf. Typischer Weise ist dieser Dünnschicht-Reflektor im Strahlweg am weitesten von der Strahlquelle entfernt. Der im Strahlweg erste der Dünnschicht-Reflektoren weist hingegen typischer Weise die fertigungstechnisch maximal mögliche Absorption für die Laserstrahlung mit der unerwünschten Polarisationskomponente auf, d.h. für CO₂-Laserstrahlung typischer Weise bei ca. 98% oder darüber.

Bei einer Weiterbildung weist mindestens einer der Dünnschicht-Reflektoren eine Absorption von weniger als 50%, bevorzugt von weniger als 30%, für die zu unterdrückende Polarisationskomponente der Laserstrahlung auf. Bei diesem Dünnschicht-Reflektor handelt es sich typischer Weise um einen von mehreren Dünnschicht-Reflektoren der Polarisator-Einrichtung, die gemeinsam die Absorption der unerwünschten Polarisationskomponente der Laserstrahlung bewirken. Typischer Weise ist ein Dünnschicht-Reflektor mit einer derart geringen Absorption derjenige Dünnschicht-Reflektor der Polarisator-Einrichtung, der im Strahlweg am weitesten von der Strahlquelle entfernt angeordnet ist.

In einer weiteren Ausführungsform ist die Polarisator-Einrichtung zur Transmission einer nicht unterdrückten Polarisationskomponente der Laserstrahlung ausgebildet. In diesem Fall transmittiert die Polarisator-Einrichtung linear polarisierte Laserstrahlung mit der nicht unterdrückten Polarisationskomponente. Bei einer solchen transmissiven Polarisator-Einrichtung kann es sich beispielsweise um eine Platte aus einem für die Laserstrahlung transparenten Material handeln, die zur einfallenden Laserstrahlung unter dem Brewster-Winkel angeordnet ist, um eine bezüglich der Oberfläche der Platte s-polarisierte Polarisationskomponente aus dem Strahlengang heraus zu reflektieren und eine dazu senkrechte, p-polarisierte Polarisationskomponente zu transmittieren. Der an der plattenförmigen Polarisator-Einrichtung ausgekoppelte Laserstrahlung mit der unerwünschten Polarisationsrichtung kann beispielsweise auf einen Absorber gelenkt werden.

Bei einer Weiterbildung ist die Polarisator-Einrichtung durch mindestens einen, in der Regel durch genau einen Dünnschicht-Polarisator gebildet. Der Dünnschicht-Polarisator (engl. "thin film polarizer") kann wie oben beschrieben als Platte ausgebildet sein, auf der an einer oder ggf. an beiden Seiten zusätzlich eine polarisationsselektive Beschichtung aufgebracht ist.

In einer vorteilhaften Weiterbildung weist der Dünnschicht-Polarisator ein Substrat aus Diamant auf. Der in der Regel plattenförmige Grundkörper des Polarisators bildet das Substrat, auf das die polarisationsselektive Beschichtung aufgebracht ist. Als Substrat für einen Polarisator, der für Strahlung im langwelligen IR-Bereich zwischen ca. 9 µm und ca. 11 µm eingesetzt werden soll, kann ein Substrat aus ZnSe verwendet werden. Bei hohen Laserleistungen tritt jedoch bei der Verwendung von ZnSe das Problem auf, dass die thermisch induzierte Verzerrung bzw. Aberration, insbesondere in Form von Astigmatismus, zu groß wird, so dass derartige Polarisatoren nur bei vergleichsweise geringen Laserleistungen verwendet werden können. Durch die Verwendung von Diamant als Substrat kann die thermisch induzierte (insbesondere astigmatische) Verzerrung stark reduziert werden, so dass dieser auch bei Laserleistungen größer als 500 W eingesetzt werden kann.

Bei einer weiteren Ausführungsform ist die Phasenschiebe-Einrichtung zur Erzeugung einer Phasenverschiebung der Laserstrahlung um 90° ausgebildet. Eine solche Phasenverschiebung von 90° bzw. λ/4 ermöglicht es, linear polarisierte Laserstrahlung in rechts oder links zirkular polarisierte Laserstrahlung umzuwandeln, was für die Funktionsweise des optischen Isolators in der Regel erforderlich ist.

Bei einer weiteren Ausführungsform ist die Phasenschiebe-Einrichtung als transmissives optisches Element ausgebildet. Wie weiter oben beschrieben wurde, werden bei Laserleistungen von mehr als 500 W typischer Weise reflektierende Phasenschiebe-Einrichtungen in Form von mit einer phasenschiebenden Beschichtung versehenen Spiegeln verwendet. Für geringere Laserleistungen zwischen ca. 50 W und 500 W werden hingegen in der Regel transparente plattenförmige optische Elemente aus einem doppelbrechenden Material als Phasenschiebe-Einrichtung verwendet, die jedoch bei Laserleistungen größer als 500 W nicht einsetzbar sind.

Auch bei Laserleistungen größer als 500 W kann eine transmissive Phasenschiebe-Einrichtung eingesetzt werden, wenn an Stelle eines doppelbrechenden Materials eine Gitterstruktur verwendet wird, die eine Formdoppelbrechung erzeugt. Eine solche Gitterstruktur weist in der Regel eine Periodenlänge auf, die kleiner ist als die Wellenlänge der Strahlung, für welche die Phasenverschiebung erzeugt werden soll und wird daher als Subwellenlängen-Gitter bezeichnet. Durch geeignete Wahl der Gitterparameter der Gitterstruktur (Periodenlänge, Füllfaktor, Geometrie, insbesondere Höhe der Gitterstrukturen) kann eine gewünschte Phasenverschiebung, beispielsweise von 90°, des Subwellenlängen-Gitters eingestellt werden. Für Wellenlängen im IR-Bereich zwischen ca. 8,5 µm und 10,5 µm ist beispielsweise in dem Artikel "Design and fabrication of an achromatic infrared wave plate with Sb-Ge-Sn-S system" von Itsunari Yamada et al., Applied Optics, Vol. 52, Issue 7, 2013 beschrieben, dass mittels einer geeigneten Gitterstruktur mit einer Periodenlänge von 3 µm auf einem Chalcogenid-Glas als Substrat eine Phasenverschiebung bzw. Retardierung von 30° erreicht werden kann.

Das formdoppelbrechende Gitter wird bevorzugt auf ein Substrat aus Diamant aufgebracht, da dieses Material wie oben beschrieben auch bei hohen Laserleistungen eine geringe thermisch induzierte Verzerrung hervorruft. Die Anbringung der Subwellenlängen-Gitterstruktur erfolgt bevorzugt durch Mikrostrukturierung einer Oberfläche des Diamantsubstrats, beispielsweise wie dies in dem Artikel "Diamond micro-optics: microlenses and antireflection structured surfaces for the infrared spectral region", M. Karlsson und F. Nikolajeff, Optics Express, Vol. 11, Issue 5, pp. 505-507, 2003 beschrieben ist.

Die Anwendungsbereich einer Phasenschiebe-Einrichtung in Form eines Substrats aus (künstlichem) Diamant, auf welches ein formdoppelbrechendes Gitter zur Erzeugung einer gewünschten Phasenverschiebung durch Mikrostrukturierung aufgebracht ist, ist nicht auf die hier beschriebene Anwendung als Bestandteil eines optischen Isolators einer Verstärkeranordnung beschränkt. Die Phasenschiebe-Einrichtung kann an anderer Stelle im Strahlengang der Laserstrahlung einer EUV-Lichtquelle eingesetzt werden. Insbesondere ist die Verwendung der Phasenschiebe-Einrichtung nicht auf EUV-Anwendungen beschränkt; diese kann vielmehr auch bei anderen optischen Systemen, bei denen hohe Laserleistungen auftreten, beispielsweise in Scheibenlasern, verwendet werden.

In einer weiteren Ausführungsform weist der optische Isolator eine weitere Phasenschiebe-Einrichtung auf, die zwischen dem optischen Verstärker und der Polarisator-Einrichtung oder auf der der Polarisator-Einrichtung abgewandten Seite des optischen Verstärkers angeordnet ist. Bei dieser Ausführungsform ist die Polarisator-Einrichtung typischer Weise auf derjenigen Seite des optischen Verstärkers angeordnet, an der die Laserstrahlung in den optischen Verstärker eintritt, während an der Seite des optischen Verstärkers, an der die verstärkte Laserstrahlung austritt, keine Polarisator-Einrichtung bzw. kein optischer Isolator vorgesehen ist, beispielsweise weil die Laserleistung der verstärkten Laserstrahlung zu hoch ist. Die weitere Phasenschiebe-Einrichtung ermöglicht es, den optischen Isolator, der im Strahlweg vor dem optischen Verstärker angeordnet ist, auch zur Unterdrückung von Laserstrahlung zu verwenden, die unerwünschter Weise von einem im Strahlweg nach dem optischen Verstärker angeordneten reflektierenden Element reflektiert wird. Die Laserstrahlung, die an einem solchen reflektierenden Element reflektiert wird, durchläuft den optischen Verstärker jedoch zwei Mal. Falls es die auftretenden Laserleistungen erlauben, sollte daher an jeder Seite des optischen Verstärkers ein optischer Isolator vorgesehen werden, wobei insbesondere eine gemeinsame Polarisator-Einrichtung genutzt werden kann, wie weiter oben beschrieben wurde.

Ein weiterer Aspekt der Erfindung betrifft eine Treiberlaseranordnung für eine EUV-Lichtquelle, umfassend: eine Verstärkeranordnung wie oben beschrieben, sowie eine Strahlquelle zur Erzeugung der Laserstrahlung. Die Strahlquelle kann einen oder mehrere Laser aufweisen, beispielsweise einen CO₂-Laser und einen weiteren Laser, der ggf. ebenfalls als CO₂-Laser ausgebildet ist. Die Laser dienen zur Erzeugung von gepulster Laserstrahlung (als Seed-Laser), genauer gesagt zur Erzeugung eines Vor-Pulses und eines Haupt-Pulses, beispielsweise wie dies in der eingangs zitierten US 2009/0095925 A1 beschrieben ist. Die Treiberlaseranordnung kann als so genannte MOPA("master oscillator power amplifer")-Anordnung betrieben werden. Typischer Weise werden die von den beiden Lasern erzeugten Laserpulse kombiniert, bevor diese der Verstärkeranordnung zugeführt werden.

Die Verstärkeranordnung weist in der Regel mehr als einen optischen Verstärker, typischer Weise mindestens zwei oder drei optische Verstärker bzw. Verstärkerstufen auf. Die optischen Verstärker enthalten typischer Weise als Verstärkungsmedium ein Gas, z.B. CO₂. Zwischen jeweils zwei der optischen Verstärker kann ein optisches Element, beispielsweise eine Blende bzw. ein Raumfilter angeordnet sein. Im Strahlweg vor und nach einer jeden solchen Blende kann jeweils ein optischer Isolator angeordnet sein, der auf die oben beschriebene Weise ausgebildet ist. Da das Target-Material der EUV-Lichtquelle als reflektierendes Element wirkt, kann insbesondere auch im Strahlweg nach dem letzten Verstärker der Verstärkeranordnung ein optischer Isolator angeordnet sein, auch wenn in diesem Bereich kein anderes Element angebracht ist, an dem die Laserstrahlung zurück reflektiert wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Darstellung eines optischen Isolators, der eine Polarisator-Einrichtung und eine Phasenschiebe-Einrichtung umfasst,
- Fig. 2: eine Darstellung einer nicht erfindungsgemäßen Verstärkeranordnung mit zwei optischen Isolatoren, die im Strahlengang vor und nach einem optischen Verstärker angeordnet sind,
- Fig. 3: eine Darstellung nicht erfindungsgemäßen Verstärkeranordnung analog Fig. 2, bei welcher ein im Strahlengang nach dem optischen Verstärker angeordneter optischer Isolator eine Polarisator-Einrichtung mit einer Mehrzahl von absorbierenden Dünnschicht-Reflektoren umfasst,
- Fig. 4: eine Darstellung analog Fig. 3, bei welcher die Dünnschicht-Reflektoren zur beidseitigen optischen Isolation in den optischen Verstärker integriert sind,
- Fig. 5a,b: zwei Darstellungen einer nicht erfindungsgemäßen Verstärkeranordnung mit einem im Strahlweg vor einem optischen Verstärker angeordneten optischen Isolator mit einer zusätzlichen Phasenschiebe-Einrichtung,
- Fig. 6: eine Darstellung von zwei im Strahlweg aufeinander folgenden optischen Verstärkern mit optischen Isolatoren,
- Fig. 7: eine Darstellung eines optischen Isolators mit einer Polarisator-Einrichtung mit fünf im Strahlweg aufeinander folgend angeordneten absorbierenden Dünnschicht-Reflektoren, und
- Fig. 8: eine Darstellung einer EUV-Lichtquelle mit einer Treiberlaseranordnung, die eine Verstärkeranordnung mit drei optischen Verstärkern umfasst.

In der folgenden Beschreibung der Zeichnungen werden für gleiche bzw. funktionsgleiche Bauteile identische Bezugszeichen verwendet.

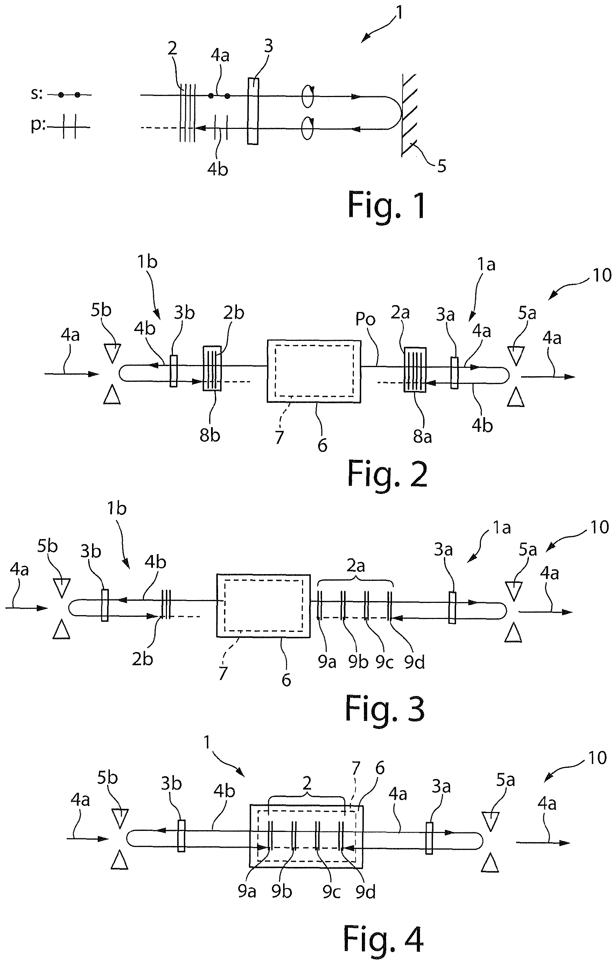

**Fig. 1** zeigt einen optischen Isolator 1, welcher eine Polarisator-Einrichtung 2 sowie eine Phasenschiebe-Einrichtung 3 aufweist. Der optische Isolator 1 soll verhindern, dass von links nach rechts propagierende Laserstrahlung 4a, die teilweise an einem reflektierenden optischen Element 5 zurück reflektiert wird, den optischen Isolator 1 verlässt, d.h. der optische Isolator 1 soll Laserstrahlung 4b, die von rechts nach links propagiert, unterdrücken bzw. blockieren.

Um diese Funktion zu erfüllen, trifft die (unpolarisierte) Laserstrahlung 4a zunächst auf die Polarisator-Einrichtung 2 und wird von dieser linear polarisiert. Bei der Polarisationskomponente, welche die Polarisator-Einrichtung 2 verlässt, handelt es sich im gezeigten Beispiel um s-polarisierte Laserstrahlung. Die Polarisator-Einrichtung 2 erzeugt die lineare Polarisation der Laserstrahlung 4a, indem eine senkrecht zur ersten Polarisationskomponente s ausgerichtete zweite Polarisationskomponente p unterdrückt wird. Es versteht sich, dass die Polarisator-Einrichtung 2 alternativ die erste Polarisationskomponente s unterdrücken kann, so dass nur die zweite Polarisationskomponente p die Polarisator-Einrichtung 2 verlässt.

Die s-polarisierte Laserstrahlung 4a durchläuft die zwischen der Polarisator-Einrichtung 2 und dem reflektierenden Element 5 angeordnete Phasenschiebe-Einrichtung 3, die als λ/4-Retarder ausgebildet ist und die eine feste Phasenverzögerung der Laserstrahlung 4a von 90° für diejenigen Strahlungsanteile, deren Polarisationsrichtungen senkrecht aufeinander stehen, bewirkt. Die linear polarisierte Laserstrahlung 4a wird an der Phasenschiebe-Einrichtung 3 im gezeigten Beispiel rechts zirkular polarisiert, an dem reflektierenden Element 5 reflektiert und trifft als links zirkular polarisierte Laserstrahlung 4b erneut auf die Phasenschiebe-Einrichtung 3. Die Phasenschiebe-Einrichtung 3 erzeugt aus der links zirkular polarisierten Laserstrahlung 4b linear polarisierte Laserstrahlung 4b mit der zweiten Polarisationskomponente p (p-Polarisation) senkrecht zur ursprünglichen Polarisationskomponente s (s-Polarisation). Wie weiter oben beschrieben wurde, unterdrückt bzw. blockiert die Polarisator-Einrichtung 2 die zweite Polarisationskomponente p der Laserstrahlung 4b, so dass diese nicht durch die Polarisator-Einrichtung 2 hindurch treten kann, wie in Fig. 1 durch eine gestrichelte Linie dargestellt ist.

Es versteht sich, dass anders als in Fig. 1 gezeigt ist, in der Regel nur ein typischer Weise geringer Anteil der von links nach rechts propagierenden Laserstrahlung 4a an dem reflektierenden Element 5 reflektiert wird, da eine solche Rückreflexion typischer Weise unerwünscht ist. Das ungewollte Auftreten von Rückreflexionen an reflektierenden optischen Elementen, beispielsweise an zwei in **Fig. 2** dargestellten Blenden 5a, 5b, die eigentlich der Transmission der von der Stahlquelle kommenden, nicht reflektierten Laserstrahlung 4a dienen sollen, die von links nach rechts propagiert, lässt sich aber in der Regel nicht vollständig vermeiden. Das Vorsehen von Blenden 5a, 5b ist jedoch typischer Weise erforderlich, um die Strahlqualität der Laserstrahlung 4a zu verbessern bzw. den Strahlweg der Laserstrahlung 4a zu begrenzen. Auch können die Blenden 5a, 5b beispielsweise in Raumfiltern vorgesehen sein, die zur Unterdrückung von Interferenzen oder zu anderen Zwecken genutzt werden. Die Blenden 5a, 5b weisen typischer Weise einen geringen Durchmesser auf und reichen nahe an das Strahlungsfeld der Laserstrahlung 4a heran.

Fig. 2 zeigt eine nicht erfindungsgemäße Verstärkeranordnung 10 mit einem optischen Isolator 1a, der wie in Fig. 1 aufgebaut ist und der im Strahlengang der von einem optischen Verstärker 6 verstärkten Laserstrahlung 4a angeordnet ist. Der optische Isolator 1a dient zur Verhinderung des Eintritts von an der im Strahlweg nach dem optischen Verstärker 6 angeordneten Blende 5a zurück reflektierter Laserstrahlung 4b in den optischen Verstärker 6. Der optische Isolator 1a weist eine Polarisator-Einrichtung 2a sowie eine Phasenschiebe-Einrichtung 3a auf, die zwischen der Polarisator-Einrichtung 2a und der Blende 5a angeordnet ist. Der optische Verstärker 6 ist zur Verstärkung von Laserstrahlung 4 ausgebildet, die mit hoher Laserleistung Po aus dem optischen Verstärker 6 austritt, die bei mehr als ca. 500 W, ggf. aber auch bei mehr als 1 kW, mehr als 5 kW etc. liegen kann.

In Fig. 2 ebenfalls dargestellt ist ein weiterer optischer Isolator 1b, der analog zu dem in Fig. 1 gezeigten optischen Isolator 1 aufgebaut ist und der eine weitere Polarisator-Einrichtung 2b und eine weitere Phasenschiebe-Einrichtung 3b aufweist. Der weitere optische Isolator 1b ist vor dem optischen Verstärker 6 angeordnet und verhindert, dass Laserstrahlung 4b, die aus dem optischen Verstärker 6 entgegen der gewünschten Propagationsrichtung, d.h. von rechts nach links propagierend, austritt, an der weiteren, im Strahlweg vor dem optischen Verstärker 6 angeordneten Blende 5b in den optischen Verstärker 6 zurück reflektiert wird. Die Laserstrahlung 4b, die von rechts nach links propagiert, kann beispielsweise aus einem weiteren optischen Verstärker stammen, der im Strahlweg nach dem optischen Verstärker 6 angeordnet ist. Für den Fall, dass der optische Verstärker 6 in einer Treiberlaseranordnung für eine EUV-Lichtquelle angeordnet ist, kann die von rechts nach links propagierende Laserstrahlung 4b auch von einem Target-Material stammen, an dem ein kleiner Anteil der von links nach rechts propagierenden Laserstrahlung 4a zu dem Verstärker 6 zurück reflektiert wird, Es kann sich ggf. auch um Laserstrahlung 4b handeln, die von dem im Strahlweg nach dem optischen Verstärker 6 angeordneten optischen Isolator 1a nicht vollständig unterdrückt werden konnte.

Mit Hilfe der beiden optischen Isolatoren 1a, 1b kann verhindert werden, dass an den Blenden 5a, 5b zum optischen Verstärker 6 zurück reflektierte Laserstrahlung 4a, 4b in den optischen Verstärker 6 eintritt. Auf diese Weise kann besonders effektiv die Bildung von parasitärer Laserstrahlung in dem optischen Verstärker 6 verhindert werden, die ansonsten dazu führen könnte, dass das in dem optischen Verstärker befindliche Verstärkermedium 7, im gezeigten Beispiel ein Lasergas, gemeinsam mit den Blenden 5a, 5b einen (stark verlustbehafteten) Resonator bildet.

Wie weiter oben beschrieben wurde, erzeugt der optische Verstärker 6 an seinem Ausgang Laserstrahlung 4a mit einer Laserleistung Po von mehr als 500 W. Um sicherzustellen, dass die Polarisator-Einrichtung 2a, die im Strahlweg der verstärkten Laserstrahlung 4a hinter dem optischen Verstärker 6 angeordnet ist, keine unerwünschten thermisch bedingten (insbesondere astigmatischen) Aberrationen erzeugt, ist die Polarisator-Einrichtung bei dem in Fig. 2 gezeigten Beispiel als transmissiver Dünnschicht-Polarisator 2a mit einer polarisationsselektiven Beschichtung ausgebildet, die auf einem plattenförmigen Diamant-Substrat 8a aufgebracht ist. Das Substrat 8a kann zur einfallenden Laserstrahlung 4a unter dem Brewster-Winkel angeordnet sein, um eine bezüglich der beschichteten Oberfläche des Substrats 8a s-polarisierte Polarisationskomponente aus dem Strahlweg heraus zu reflektierten und eine dazu senkrechte, p-polarisierte Polarisationskomponente zu transmittieren.

Auch die weitere Polarisator-Einrichtung 2b, die im Strahlweg vor dem optischen Verstärker 6 angeordnet ist, kann ein strahlungsbeständiges Substrat 8b aus (künstlichem) Diamant aufweisen. Aufgrund der vergleichsweise hohen Herstellungskosten kann bei einer Polarisator-Einrichtung 2b, die einer Laserleistung von weniger als 500 W, beispielsweise zwischen 100 W und 500 W, ausgesetzt ist, auch ein anderes Material für das Substrat 8b gewählt werden. Weist die Laserstrahlung 4a eine Wellenlänge im Bereich um ca. 10,6 µm auf, die typischer Weise von einem CO₂-Laser erzeugt wird, kann bei entsprechend geringer Laserleistung vor dem optischen Verstärker 6 das Substrat 8b beispielsweise aus ZnSe oder aus Ge hergestellt werden.

Auch die im Strahlweg nach dem optischen Verstärker 6 angeordnete Phasenschiebe-Einrichtung 3a ist einer Laserleistung po von mehr als 500 W ausgesetzt. Die Phasenschiebe-Einrichtung 3a kann als Spiegel ausgebildet sein, auf den eine phasenschiebende Beschichtung aufgebracht ist. Alternativ kann die Phasenschiebe-Einrichtung 3a auch als transmissives optisches Element ausgebildet sein. Um für diesen Fall der Laserleistung po von mehr als 500 W standzuhalten, weist die Phasenschiebe-Einrichtung 3a im gezeigten Beispiel eine plattenförmiges Substrat aus (künstlichem) Diamant auf, an dem eine Gitterstruktur aufgebracht ist, die eine Formdoppelbrechung erzeugt und somit eine phasenschiebende Wirkung besitzt. Bei der Gitterstruktur handelt es sich um ein Subwellenlängen-Gitter, dessen Gitterperiode kleiner ist als die Wellenlänge der von dem Substrat transmittierten Laserstrahlung 4a. Das formdoppelbrechende Gitter kann an der Oberfläche des typischer Weise plattenförmigen Substrats durch Mikrostrukturierung erzeugt werden. Es versteht sich, dass auch die im Strahlweg vor dem optischen Verstärker 6 angeordnete Phasenschiebe-Einrichtung 3a als transmissives optisches Element ausgebildet sein kann.

**Fig. 3** zeigt eine gegenüber Fig. 2 modifizierte, nicht erfindungsgemäße Verstärkeranordnung 10, bei welcher die im Strahlweg nach dem optischen Verstärker 6 angeordnete Polarisator-Einrichtung 2a eine Mehrzahl, genauer gesagt vier, absorbierende Dünnschicht-Reflektoren 9a,..., 9d aufweist. Die absorbierenden Dünnschicht-Reflektoren 9a,..., 9d unterdrücken eine der Polarisationskomponenten, typischer Weise die zweite Polarisationskomponente p, die von einem jeweiligen Dünnschicht-Reflektor 9a bis 9b absorbiert wird. Die Dünnschicht-Reflektoren 9a, ..., 9d weisen im gezeigten Beispiel eine Substrat aus Kupfer auf, auf das eine polarisationsselektive Beschichtung aufgebracht ist.

Bei langwelliger IR-Strahlung, wie sie typischer Weise von CO₂-Lasern erzeugt wird, können mittels eines einzelnen Dünnschicht-Reflektors 9a,..., 9d typischer Weise ca. 98% oder mehr der zweiten Polarisationskomponente p der Laserstrahlung 4a absorbiert werden. Da bei hohen Laserleistungen von mehr als 500 W auch die Reflexion eines geringen Anteils der Laserstrahlung 4a, 4b in den optischen Verstärker 6 ausreichend ist, um ggf. die Laserschwelle zu überschreiten, sind im gezeigten Beispiel vier Dünnschicht-Reflektoren 9a,...,9d im Strahlweg der verstärkten Laserstrahlung 4a hintereinander angeordnet, um die unerwünschte zweite Polarisationskomponente p besonders effektiv zu unterdrücken.

Bei einem in **Fig. 4** gezeigten Ausführungsbeispiel der Verstärkeranordnung 10 ist die Polarisator-Einrichtung 2 in den optischen Verstärker 6 integriert. Zu diesem Zweck werden in dem optischen Verstärker 6 ohnehin vorhandene Umlenkspiegel als absorbierende Dünnschicht-Reflektoren 9a,..., 9d genutzt, indem die Umlenkspiegel mit einer polarisationsselektiven Beschichtung versehen werden. Bei dem in Fig. 4 gezeigten Beispiel sind die Dünnschicht-Reflektoren 9a, ..., 9d innerhalb des Gehäuses des optischen Verstärkers 6 angeordnet und von dem gasförmigen Verstärkermedium 7 umgeben. Es versteht sich, dass nicht zwingend alle der in den optischen Verstärker 6 integrierten absorbierenden Dünnschicht-Reflektoren 9a, ..., 9b von dem gasförmigen Verstärkermedium 7 umgeben sein müssen.

Bei der in Fig. 4 gezeigten Verstärkeranordnung 10 ist der optische Verstärker 6 selbst Teil des optischen Isolators 1, der zusätzlich die beiden im Strahlweg vor bzw. hinter dem optischen Verstärker 6 angeordneten Phasenschiebe-Einrichtungen 3a, 3b aufweist. Der auf diese Weise aufgebaute optische Isolator 1 ermöglicht es, den Eintritt von Laserstrahlung 4a, 4b in den optischen Verstärker 6, die an den im Strahlweg vor und hinter dem optischen Verstärker 6 angeordneten Blenden 5a, 5b reflektiert wird, zu verhindern, ohne dass zu diesem Zweck wie in Fig. 3 gezeigt zwei Polarisator-Einrichtungen 2a, 2b benötigt werden.

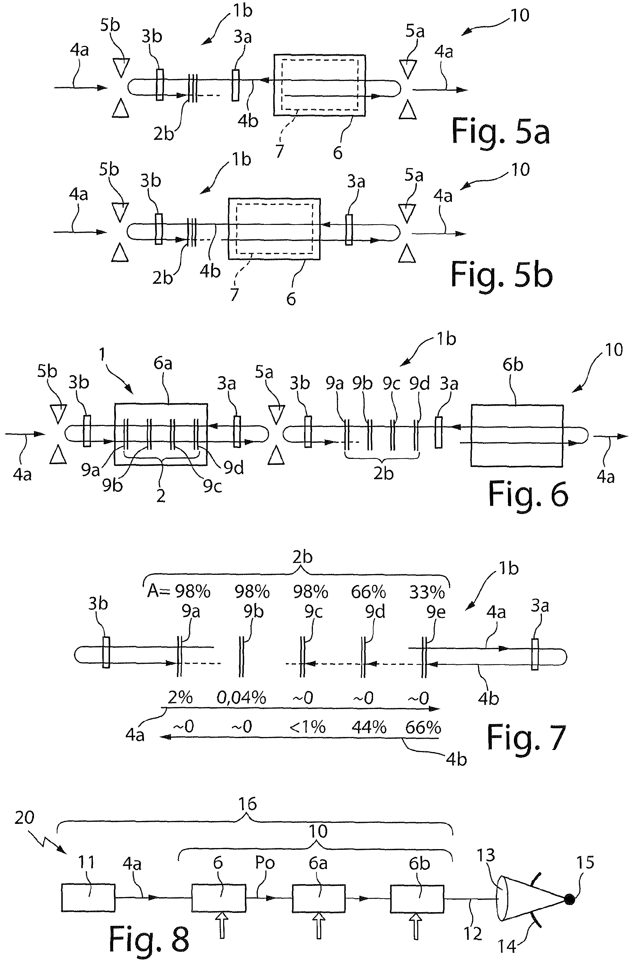

**Fig. 5a,b** zeigen zwei Beispiele einer nicht erfindungsgemäßen Verstärkeranordnung 10, die einen im Strahlweg vor dem optischen Verstärker 6 angeordneten optischen Isolator 1b, aber keinen optischen Isolator im Strahlweg nach dem optischen Verstärker 6 aufweist. Um dennoch Laserstrahlung 4a, die an der im Strahlweg nach dem optischen Verstärker 6 angeordneten Blende 5a reflektiert wird und durch den optischen Verstärker 6 hindurch tritt, zu unterdrücken, ist bei dem in Fig. 5a gezeigten Beispiel zwischen dem optischen Verstärker 6 und der Polarisator-Einrichtung 4b eine weitere Phasenschiebe-Einrichtung 3a angeordnet. Bei dem in Fig. 5b gezeigten Beispiel ist die weitere Phasenschiebe-Einrichtung 3a hingegen auf der der Polarisator-Einrichtung 2b abgewandten Seite des optischen Verstärkers 6 angeordnet. Bei den in Fig. 5a und Fig. 5b gezeigten Beispielen wird der optische Verstärker 6 von dem unerwünschten Anteil der Laserstrahlung 4a bzw. 4b zwei Mal durchlaufen, bevor diese von der Polarisator-Einrichtung 2b blockiert wird.

Eine in **Fig. 6** dargestellte Verstärkeranordnung 10 weist zwei optische Verstärker 6a, 6b auf, die im Strahlweg der Laserstrahlung 4a hintereinander angeordnet sind. Vor und hinter dem im Strahlweg ersten Verstärker 6 ist jeweils eine Blende 5b, 5a angeordnet. Der erste optische Verstärker 6 ist Teil eines ersten optischen Isolators 1, der wie in Fig. 4 ausgebildet ist. Vor dem zweiten optischen Verstärker 6 ist ein zweiter optischer Isolator 1b angeordnet, der wie in Fig. 5a dargestellt ausgebildet ist. Die Polarisator-Einrichtung 2b des zweiten optischen Isolators 1b weist ebenfalls eine Mehrzahl von absorbierenden Dünnschicht-Reflektoren 9a,..., 9d auf. Im Strahlweg hinter dem zweiten optischen Verstärker 6b ist eine weitere (nicht gezeigte) Blende oder ein anderes reflektierendes Element, beispielsweise ein Target-Material einer EUV-Lichtquelle, angeordnet; die von dem zweiten optischen Verstärker 6b erzeugte Laserleistung ist jedoch so groß, dass im gezeigten Beispiel auf das Vorsehen eines weiteren Isolators nach dem zweiten optischen Verstärker 6b verzichtet wurde.

**Fig. 7** zeigt eine Möglichkeit, um die Polarisator-Einrichtung 2b des zweiten optischen Isolators 1b von Fig. 6 auch bei hohen Laserleistungen von bis zu 10 kW oder ggf. darüber zu verwenden. Wie in Fig. 7 dargestellt ist, weist die Polarisator-Einrichtung 2b insgesamt fünf im Strahlweg aufeinander folgende absorbierende Dünnschicht-Reflektoren 9a,..., 9e auf, von denen die ersten drei Dünnschicht-Reflektoren 9a, 9b, 9c eine Absorption A von mehr als ca. 98% für Laserstrahlung mit der zweiten Polarisationskomponente p aufweisen. Bei den beiden letzten im Strahlweg angeordneten Dünnschicht-Polarisatoren 9d, 9e nimmt die Absorption A für die zweite Polarisationskomponente p ab, und zwar beim vierten Dünnschicht-Polarisator 9d auf A = 66% und beim fünften absorbierenden Dünnschicht-Polarisator 9e auf A = 33%.

Die im Vergleich zu den ersten drei Dünnschicht-Polarisatoren 9a-c reduzierte Absorption A des vierten und fünften Dünnschicht-Polarisators 9d, 9e ist insbesondere für den Fall günstig, dass von dem im Strahlweg folgenden optischen Verstärker 6b (vgl. Fig. 6), von der hinter diesem angeordneten Blende und/oder von einem Target-Material einer EUV-Lichtquelle (s.o.) von rechts nach links propagierende Laserstrahlung 4b erzeugt wird, die eine vergleichsweise hohe Laserleistung aufweist. Würde der fünfte absorbierende Dünnschicht-Reflektor 9e eine Absorption von 98% oder mehr aufweisen, könnte dieser sich ggf. zu stark erhitzen und dabei deformieren.

Um dies zu verhindern, absorbiert der fünfte Dünnschicht-Reflektor 9e im gezeigten Beispiel nur ca. ein Drittel der auftreffenden Laserstrahlung 4b, wodurch eine solche Deformation verhindert werden kann. Der vierte Dünnschicht-Reflektor 9d absorbiert hingegen zwei Drittel der auftreffenden Laserstrahlung 4b, die allerdings durch den fünften Dünnschicht-Reflektor 9e bereits in ihrer Laserleistung reduziert wurde. Auch der vierte Dünnschicht-Reflektor 9d wird daher nicht so stark aufgeheizt, dass dieser sich deformiert. Durch den vierten und fünften Dünnschicht-Reflektor 9d, 9e wird die auf den dritten Dünnschicht-Reflektor 9c auftreffende Laserleistung so stark reduziert, dass dieser die maximal mögliche Absorption A von ca. 98% für die einfallende Laserstrahlung 4b aufweist.

Die Verwendung des ersten und zweiten Dünnschicht-Reflektors 9a,b stellt sicher, dass Laserstrahlung mit der unerwünschten Polarisationskomponente p von der Polarisator-Einrichtung 2a nahezu vollständig absorbiert wird, und zwar sowohl für von links nach rechts propagierende Laserstrahlung 4a als auch für von rechts nach links propagierende Laserstrahlung 4b, wie in Fig. 7 durch zwei Pfeile dargestellt ist, über denen der jeweils noch verbleibende, nicht absorbierte Anteil der Laserstrahlung mit der zu unterdrückenden zweiten Polarisationskomponente p dargestellt ist. Es versteht sich, dass eine Polarisator-Einrichtung 2 wie sie in Fig. 7 gezeigt ist auch in einen optischen Verstärker 6, 6a integriert werden kann, wie er in Fig. 4 bzw. in Fig. 6 gezeigt ist.

**Fig. 8** zeigt schließlich stark schematisch eine EUV-Lichtquelle 20, welche eine Strahlquelle 11, eine Verstärkeranordnung 10 mit drei optischen Verstärkern bzw. Verstärkerstufen 6, 6a, 6b, eine nicht näher dargestellten Strahlführungseinrichtung 12 sowie eine Fokussiereinrichtung 13 aufweist. Die Fokussiereinrichtung 13 dient dazu, die von der Strahlquelle 11 erzeugte und von den Verstärkeranordnung 10 verstärkte Laserstrahlung 4a an einem Zielbereich zu fokussieren, an dem ein Target-Material 15 eingebracht ist. Das Target-Material geht bei der Bestrahlung mit dem Laserstrahl 4a in einen Plasma-Zustand über und emittiert hierbei EUV-Strahlung, die mittels eines Kollektorspiegels 14 fokussiert wird. Bei dem in Fig. 8 gezeigten Beispiel weist der Kollektorspiegel 14 eine Öffnung zum Durchtritt der Laserstrahlung 4a auf. Die Strahlquelle 11 weist im gezeigten Beispiel zwei CO₂-Laser auf, um einen Vor-Puls und einen Haupt-Puls zu erzeugen, die gemeinsam in der Verstärkeranordnung 10 verstärkt werden und die auf das Target-Material 15 fokussiert werden. Die Strahlquelle 11 bildet gemeinsam mit der Verstärkeranordnung 10 eine Treiberlaseranordnung 16 der EUV-Lichtquelle 20.

Zwischen jeweils zwei der optischen Verstärker 6, 6a, 6b, zwischen dem ersten optischen Verstärker 6 und der Strahlquelle 11 sowie zwischen dem dritten optischen Verstärker 6b und der Strahlführungseinrichtung 12 kann jeweils eine Blende bzw. ein Raumfilter angeordnet sein, an dem Laserstrahlung 4a unerwünschter Weise reflektiert wird. Vor und/oder nach einer solchen Blende kann ein optischer Isolator 1a, 1b angeordnet sein bzw. ein jeweiliger optischer Verstärker 6 kann selbst einen Teil eines optischen Isolators 1 bilden, wie dies in Fig. 4 gezeigt ist.

Typischer Weise liegt die Laserleistung P_{O} der Laserstrahlung 4a nach dem ersten Verstärker 6 bereits bei mehr als 500 W. Um bei einer derart hohen Laserleistung einen optischen Isolator, insbesondere eine Polarisator-Einrichtung 2, 2a, 2b, betreiben zu können, ist es erforderlich, diese auf die weiter oben beschriebene Weise auszubilden. Durch das Vorsehen eines bzw. mehrerer optischer Isolatoren, die im Strahlengang nach dem ersten Verstärker 6 angeordnet sind, kann die Erzeugung von parasitärer Laserstrahlung auch in dem zweiten und dritten Verstärker 6a, 6b wirksam verhindert werden.

Es versteht sich, dass optische Isolatoren zur Verhinderung von parasitärer Laserstrahlung auch bei optischen Verstärkern angewendet werden können, die in anderen optischen Einrichtungen als der gezeigten Treiberlaseranordnung 16 Verwendung finden, um eine optische Isolation bei hohen Laserleistungen von 500 W, 1kW und ggf. 10 kW oder mehr zu ermöglichen.

## Patentansprüche

1. Verstärkeranordnung (10), insbesondere für eine Treiberlaseranordnung (16) einer EUV-Lichtquelle (20), umfassend:
einen optischen Verstärker (6, 6a, 6b) zur Verstärkung von gepulster Laserstrahlung (4a),
mindestens ein reflektierendes Element, insbesondere ein Target-Material (15) der EUV-Lichtquelle (20) oder eine Blende (5a, 5b), an dem ein Anteil der aus dem optischen Verstärker (6, 6a, 6b) austretenden Laserstrahlung (4a, 4b) zum optischen Verstärker (6, 6a, 6b) zurück reflektiert wird, sowie mindestens einen im Strahlweg der Laserstrahlung (4a, 4b) angeordneten optischen Isolator (1, 1a, 1b), der eine Polarisator-Einrichtung (2, 2a, 2b) zur Unterdrückung einer Polarisationskomponente (s, p) der Laserstrahlung (4a, 4b) und eine zwischen der Polarisator-Einrichtung (2, 2a, 2b) und dem reflektierenden Element (20, 5a, 5b) angeordnete Phasenschiebe-Einrichtung (3a, 3b) aufweist, wobei zumindest die Polarisator-Einrichtung (2, 2a, 2b) des optischen Isolators (1, 1a, 1b) an einem Ort positioniert ist, an dem die Laserstrahlung (4a, 4b) eine Laserleistung (Po) von mehr als 500 W aufweist, wobei die Polarisator-Einrichtung (2, 2a, 2b) zur Reflexion einer nicht unterdrückten Polarisationskomponente (s) der Laserstrahlung (4a, 4b) ausgebildet ist, und wobei die Polarisator-Einrichtung (2, 2a, 2b) mindestens einen die zu unterdrückende Polarisationskomponente (p) absorbierenden Dünnschicht-Reflektor (9a, ..., 9e) aufweist,
**dadurch gekennzeichnet,**
**dass** der mindestens eine absorbierende Dünnschicht-Reflektor (9a, ..., 9e) einen Umlenkspiegel des optischen Verstärkers (6, 6a) bildet, der in einem Gehäuse des optischen Verstärkers (6, 6a) angeordnet und von einem gasförmigen Verstärkermedium (7) umgeben ist.

2. Verstärkeranordnung nach Anspruch 1, bei welcher die Polarisator-Einrichtung (2b) mindestens zwei Dünnschicht-Reflektoren (9d, 9e) mit unterschiedlicher Absorption für die zu unterdrückende Polarisationskomponente (s) der Laserstrahlung (4a, 4b) aufweist.

3. Verstärkeranordnung nach Anspruch 2, bei welcher die Polarisator-Einrichtung (2b) mindestens drei im Strahlweg der Laserstrahlung (4a) aufeinander folgende Dünnschicht-Reflektoren (9c, 9d, 9e) mit abnehmender Absorption (A) für die zu unterdrückende Polarisationskomponente (p) aufweist.

4. Verstärkeranordnung nach einem der vorhergehenden Ansprüche, bei welcher mindestens einer der Dünnschicht-Reflektoren (9d) eine Absorption von weniger als 50 %, bevorzugt von weniger als 30% für die zu unterdrückende Polarisationskomponente (p) aufweist.

5. Verstärkeranordnung nach einem der vorhergehenden Ansprüche, bei welcher die Polarisator-Einrichtung (2a, 2b) zur Transmission einer nicht unterdrückten Polarisationskomponente (p) der Laserstrahlung (4a, 4b) ausgebildet ist.

6. Verstärkeranordnung nach Anspruch 5, bei welcher die Polarisator-Einrichtung als mindestens ein Dünnschicht-Polarisator (2a, 2b) ausgebildet ist.

7. Verstärkeranordnung nach Anspruch 6, bei welcher der Dünnschicht-Polarisator (2a, 2b) ein Substrat (8a, 8b) aus Diamant aufweist.

8. Verstärkeranordnung nach einem der vorhergehenden Ansprüche, bei welcher die Phasenschiebe-Einrichtung (3a, 3b) zur Erzeugung einer Phasenverschiebung der Laserstrahlung (4a, 4b) um 90° ausgebildet ist.

9. Verstärkeranordnung nach einem der vorhergehenden Ansprüche, bei welcher die Phasenschiebe-Einrichtung als transmissives optisches Element (3a, 3b) ausgebildet ist.

10. Verstärkeranordnung nach einem der vorhergehenden Ansprüche, bei welcher zwischen dem optischen Verstärker (6, 6b) und der Polarisator-Einrichtung (2b) oder auf der der Polarisator-Einrichtung (2b) abgewandten Seite des optischen Verstärkers (6, 6b) eine weitere Phasenschiebe-Einrichtung (3a) angeordnet ist.

11. Treiberlaseranordnung (16) für eine EUV-Lichtquelle (20), umfassend:
eine Verstärkeranordnung (10) nach einem der vorhergehenden Ansprüche, sowie eine Strahlquelle (11) zur Erzeugung der Laserstrahlung (4a).

## Claims

1. Amplifier arrangement (10), in particular for a driver laser arrangement (16) of an EUV light source (20) comprising:
an optical amplifier (6, 6a, 6b) for amplifying pulsed laser radiation (4a),
at least one reflective element, in particular a target material (15) of the EUV light source (20) or a stop (5a, 5b), at which a portion of the laser radiation (4a, 4b) emerging from the optical amplifier (6, 6a, 6b) is reflected back to the optical amplifier (6, 6a, 6b), and
at least one optical isolator (1, 1a, 1b) arranged in the beam path of the laser radiation (4a, 4b) and having a polarizer device (2, 2a, 2b) for suppressing a polarization component (s, p) of the laser radiation (4a, 4b) and a phase shifting device (3a, 3b) arranged between the polarizer device (2, 2a, 2b) and the reflective element (20, 5a, 5b),
wherein at least the polarizer device (2, 2a, 2b) of the optical isolator (1, 1a, 1b) is positioned at a location at which the laser radiation (4a, 4b) has a laser power (Po) of more than 500 W, wherein the polarizer device (2, 2a, 2b) is configured for reflecting a non-suppressed polarization component (s) of the laser radiation (4a, 4b), and
wherein the polarizer device (2, 2a, 2b) has at least one thin-film reflector (9a, ..., 9e) which absorbs the polarization component (p) to be suppressed,
**characterized**
**in that** the at least one absorbent thin-film reflector (9a, ..., 9e) forms a deflection mirror of the optical amplifier (6, 6a), which is arranged in a housing of the optical amplifier (6, 6a) and is surrounded by a gaseous amplifier medium (7).

2. Amplifier arrangement according to Claim 1, wherein the polarizer device (2b) has at least two thin-film reflectors (9d, 9e) having different absorption for the polarization component (s) to be suppressed of the laser radiation (4a, 4b).

3. Amplifier arrangement according to Claim 2, wherein the polarizer device (2b) has at least three thin-film reflectors (9c, 9d, 9e) having decreasing absorption (A) for the polarization component (p) to be suppressed, said thin-film reflectors succeeding one another in the beam path of the laser radiation (4a).

4. Amplifier arrangement according to any of the preceding claims, wherein at least one of the thin-film reflectors (9d) has an absorption of less than 50%, preferably of less than 30%, for the polarization component (p) to be suppressed.

5. Amplifier arrangement according to any of the preceding claims, wherein the polarizer device (2a, 2b) is configured for transmitting a non-suppressed polarization component (p) of the laser radiation (4a, 4b).

6. Amplifier arrangement according to Claim 5, wherein the polarizer device is configured as at least one thin-film polarizer (2a, 2b).

7. Amplifier arrangement according to Claim 6, wherein the thin-film polarizer (2a, 2b) has a substrate (8a, 8b) composed of diamond.

8. Amplifier arrangement according to any of the preceding claims, wherein the phase shifting device (3a, 3b) is configured for generating a phase shift of the laser radiation (4a, 4b) by 90°.

9. Amplifier arrangement according to any of the preceding claims, wherein the phase shifting device is configured as a transmissive optical element (3a, 3b).

10. Amplifier arrangement according to any of the preceding claims, wherein a further phase shifting device (3a) is arranged between the optical amplifier (6, 6b) and the polarizer device (2b) or on that side of the optical amplifier (6, 6b) which faces away from the polarizer device (2b).

11. Driver laser arrangement (16) for an EUV light source (20), comprising:
an amplifier arrangement (10) according to any of the preceding claims, and a beam source (11) for generating the laser radiation (4a).

## Revendications

1. Agencement amplificateur (10), en particulier pour un agencement de laser excitateur (16) d'une source de lumière EUV (20), comprenant :
un amplificateur optique (6, 6a, 6b) pour amplifier un rayonnement laser pulsé (4a),
au moins un élément réfléchissant, en particulier un matériau cible (15) de la source de lumière EUV (20) ou un diaphragme (5a, 5b) sur lequel une partie du rayonnement laser (4a, 4b) sortant de l'amplificateur optique (6, 6a, 6b) est réfléchie en retour vers l'amplificateur optique (6, 6a, 6b), et
au moins un isolateur optique (1, 1a, 1b) disposé dans le trajet de faisceau du rayonnement laser (4a, 4b), qui présente un dispositif polarisant (2, 2a, 2b) pour supprimer une composante de polarisation (s, p) du rayonnement laser (4a, 4b) et un dispositif déphaseur (3a, 3b) disposé entre le dispositif polarisant (2, 2a, 2b) et l'élément réfléchissant (20, 5a, 5b), dans lequel au moins le dispositif polarisant (2, 2a, 2b) de l'isolateur optique (1, 1a, 1b) est positionné à un endroit où le rayonnement laser (4a, 4b) présente une puissance laser (Po) de plus de 500 W, dans lequel le dispositif polarisant (2, 2a, 2b) est conçu pour réfléchir une composante de polarisation non supprimée (s) du rayonnement laser (4a, 4b), et dans lequel le dispositif polarisant (2, 2a, 2b) présente au moins un réflecteur à couche mince (9a, ..., 9e) absorbant la composante de polarisation à supprimer (p),
**caractérisé en ce**
**que** ledit au moins un réflecteur à couche mince absorbant (9a, ..., 9e) forme un miroir de renvoi de l'amplificateur optique (6, 6a), qui est disposé dans un boîtier de l'amplificateur optique (6, 6a) et entouré d'un milieu amplificateur gazeux (7).

2. Agencement amplificateur selon la revendication 1, dans lequel le dispositif polarisant (2b) présente au moins deux réflecteurs à couche mince (9d, 9e) ayant une absorption différente pour la composante de polarisation à supprimer (s) du rayonnement laser (4a, 4b).

3. Agencement amplificateur selon la revendication 2, dans lequel le dispositif polarisant (2b) présente au moins trois réflecteurs à couche mince (9c, 9d, 9e) se succédant dans le trajet de faisceau du rayonnement laser (4a) avec une absorption (A) décroissante pour la composante de polarisation à supprimer (p).

4. Agencement amplificateur selon l'une des revendications précédentes, dans lequel au moins l'un des réflecteurs à couche mince (9d) présente une absorption inférieure à 50 %, de préférence inférieure à 30 %, pour la composante de polarisation à supprimer (p).

5. Agencement amplificateur selon l'une des revendications précédentes, dans laquelle le dispositif polarisant (2a, 2b) est conçu pour transmettre une composante de polarisation non supprimée (p) du rayonnement laser (4a, 4b).

6. Agencement amplificateur selon la revendication 5, dans lequel le dispositif polarisant est conçu comme au moins un polariseur à couche mince (2a, 2b).

7. Agencement amplificateur selon la revendication 6, dans lequel le polariseur à couche mince (2a, 2b) présente un substrat (8a, 8b) en diamant.

8. Agencement amplificateur selon l'une des revendications précédentes, dans lequel le dispositif déphaseur (3a, 3b) est conçu pour produire un déphasage du rayonnement laser (4a, 4b) de 90°.

9. Agencement amplificateur selon l'une des revendications précédentes, dans lequel le dispositif déphaseur est conçu comme un élément optique transmissif (3a, 3b).

10. Agencement amplificateur selon l'une des revendications précédentes, dans laquelle un autre dispositif déphaseur (3a) est disposé entre l'amplificateur optique (6, 6b) et le dispositif polarisant (2b) ou du côté de l'amplificateur optique (6, 6b) opposé au dispositif polarisant (2b).

11. Agencement de laser excitateur (16) pour une source de lumière EUV (20), comprenant :
un agencement amplificateur (10) selon l'une des revendications précédentes ainsi qu'une source de faisceau (11) pour générer le rayonnement laser (4a).
